# EUROPEAN PATENT SPECIFICATION

(11) **EP 3 722 099 B1**
(45) Date of publication and mention of the grant of the patent: **11.01.2023**
(21) Application number: 20175991.7
(22) Date of filing: 10.07.2018
(51) Int. Cl.: B41J 2/175, B41J 29/38, B41J 29/393, G06F 3/12

(54) **METHOD FOR DETERMINING AN AMOUNT OF INK AND INKJET PRINTER**
VERFAHREN ZUR BESTIMMUNG EINER TINTENMENGE UND TINTENSTRAHLDRUCKER
PROCÉDÉ DE DÉTERMINATION D'UNE QUANTITÉ D'ENCRE ET IMPRIMANTE À JET D'ENCRE

(30) Priority: 14.07.2017 US 201715650001
(43) Date of publication of application: 14.10.2020
(62) Divisional of application: 18182570.4
(73) Proprietor: Funai Electric Co., Ltd., Daito, Osaka, 574-0013 (JP)
(72) Inventor: BARKLEY, Lucas, Lexington, KY Kentucky 40509 (US); DEBOARD, Bruce, Georgetown, KY Kentucky 40324 (US); JONES, Brian, Lexington, KY Kentucky 40513 (US)
(74) Representative: Becker, Eberhard

(56) References cited:
- WO-A1-2015/088828
- WO-A1-2017/078722
- US-A1- 2007 097 161
- US-A1- 2018 074 768

## Description

### FIELD

This invention relates to the field of inkjet printers and printhead cartridges. More particularly, this invention relates to a system for advertising ink dot count values over a network when a printhead cartridge is moved from one printer to another.

### BACKGROUND

Nonvolatile memory in disposable inkjet printhead cartridges is typically very small to keep manufacturing costs down. Re-writable nonvolatile memory is more expensive than one-time programmable memory. Because of these constraints, disposable inkjet printheads provide only a coarse indication of ink remaining due to a small number of ink levels encoded in the printhead's limited nonvolatile memory. When a printhead is moved from one printer to another, it carries only this very coarse ink level indication with it. The new printer must make an assumption about where the actual ink level is between the coarse levels that are reported by the printhead nonvolatile memory. In applications such as business accounting, this is unacceptable because accurate dot counting is important.

US2007097161A1 provides a printer configured to calculate the amount of ink used only for printing as a number of discharged ink shots, and send this shot count with the printer serial number and ink cartridge ID to a server. The server saves the shot count, printer serial number, ink cartridge ID, and an error correction code as status information. The server or server upstream from the server can reliably determine.

WO2017078722A1 discloses that for each of a plurality of printers of a printer fleet, identification data indicative of marking agent cartridges installed is obtained via a network. The identification data is caused to be stored in association with a fleet identifier for the printer fleet. A request for fleet installation information with respect to a first marking agent cartridge is received from a computing device. It is determined, based upon the identification data, whether a first marking agent cartridge was previously installed at a printer of the printer fleet. Determination data indicative of the determination is sent to the computing device.

US2018074768A1 discloses a terminal device that includes a controller and is capable of communicating over a network with a first printer and a second printer. The first printer includes a first memory storing status information about usage status of a cartridge currently mounted in the first printer. The second printer includes a second memory. The controller is configured to perform: transmitting a request to the first printer, the request requesting to transmit the status information; in response to transmitting the request, receiving the status information; and in response to a specific condition being satisfied, transmitting the received status information to the second printer, the specific condition including a condition that the controller receives the status information. The status information transmitted to the second printer is stored in the second memory and is used by the second printer after the cartridge is removed from the first printer and then mounted in the second printer.

WO2015088828A1 discloses electronic systems, such as printing systems, often use components that have integral memory. The integral memory can be used to store information about the component. In some printing systems this memory includes a portion that stores a value indicative of a print yield. Disclosed is a method and system for allowing the memory to have data indicative of an increased print yield.

What is needed, therefore, is a way to more precisely keep track of the remaining ink level in an inkjet printhead cartridge as the cartridge moves from one printer to another.

### SUMMARY

The system described herein solves the problem of determining the exact amount of ink remaining in printhead cartridges used in printers that are all connected to the same network and that can communicate with each other. Each printer keeps a history of printhead cartridges that have been used in the printer. Each printhead cartridge stores in its memory a status indicator value that indicates whether the cartridge has ever been used before in any printer.

When a printer receives a printhead cartridge that has been previously used, the printer sends a request on the network that in effect says, "I have a used printhead installed having serial number X. Any printer that has information about this printhead, please report to me." Each printer on the network having the matching printhead serial number in their history then reports over the network the last recorded ink dot count associated with the matching printhead serial number. The requesting printer chooses the most up-to-date response based either on the highest dot count or the latest time-stamp, if available. The requesting printer then updates its memory using the dot count from the most up-to-date response and begins counting dots from that updated count for subsequent print jobs performed using the installed printhead. Based on a known total available ink dot count for a particular cartridge ink reservoir size, the printer can precisely determine the amount of ink remaining in the cartridge.

Accordingly, in one embodiment, the invention provides a method for determining an amount of ink that has been used by an inkjet printhead cartridge that is installed in an inkjet printer connected to a network of inkjet printers. The method comprises: storing a printhead identification value in a printhead memory device on the inkjet printhead cartridge; and providing a processor in the inkjet printer for executing instructions for: accessing the printhead identification value from the printhead memory device and storing the printhead identification value in a memory device of the inkjet printer; communicating over the network with one or more other inkjet printers connected to the network; receiving other ink dot count values from the one or more other inkjet printers connected to the network, wherein the other ink dot count values received from the one or more other inkjet printers are associated with the printhead identification value stored in the memory device of the inkjet printer; storing the other ink dot count values having highest value as an ink dot count value in the memory device of the inkjet printer; and as printing is being performed by the inkjet printer, updating the ink dot count value stored in the memory device of the inkjet printer by incrementing the ink dot count value stored in the memory device of the inkjet printer proportional to a number of ink dots ejected from the inkjet printhead cartridge.

In the above method, the method may further comprise storing a status indicator value in the printhead memory device for indicating a used status or a not-used status of the inkjet printhead cartridge prior to installing the inkjet printhead cartridge in the inkjet printer.

In the above method, the method further comprises determining a remaining ink level value for the inkjet printhead cartridge based on the ink dot count value stored in the memory device of the inkjet printer.

In the above method, the method may further comprise storing a timestamp value associated with the printhead identification value in the printhead memory device.

In the above method, the method may further comprise accessing the timestamp value in the printhead memory device to determine the most recent timestamp value; and providing the highest ink dot count value based on the most recent timestamp value for storing in the memory device of the inkjet printer.

In another embodiment, the present invention provides an inkjet printer attached to a network of inkjet printers. The inkjet printer comprises; a network interface configured to communicate with the network of the inkjet printers; an inkjet printhead cartridge having a printhead memory device in which a printhead identification value is stored; a memory device of the inkjet printer configured to store the printhead identification value accessed from the printhead memory device; a processor configured to execute instructions for communicating over the network with one or more other inkjet printers connected to the network; receiving other ink dot count values from the one or more other inkjet printers connected to the network, wherein the other ink dot count values received from the one or more other inkjet printers are associated with the printhead identification value stored in the memory device of the inkjet printer; storing the other ink dot count values having highest value as an ink dot count value in the memory device of the inkjet printer; and as printing is being performed by the inkjet printer, updating the dot count value stored in the memory device of the inkjet printer by incrementing the ink dot count value stored in the memory device of the inkjet printer proportional to a number of ink dots ejected from the inkjet printhead cartridge.

In the above inkjet printer, the processor may further configured to execute instructions to determine a remaining ink level value for the inkjet printhead cartridge based on the current ink dot count value stored in the memory device of the inkjet printer.

In the above inkjet printer, after the processor configured to executes instructions for updating the dot count value stored in the memory device of the inkjet printer, the processor may further configured to execute instructions for storing the ink dot count value in the printer memory device of the inkjet printer in association with the printhead identification value.

### BRIEF DESCRIPTION OF THE DRAWINGS

Other embodiments of the invention will become apparent by reference to the detailed description in conjunction with the figures, wherein elements are not to scale so as to more clearly show the details, wherein like reference numbers indicate like elements throughout the several views, and wherein:
FIG. 1 depicts multiple inkjet printers connected to a network according to a preferred embodiment;
FIG. 2 depicts a method for advertising dot counts of inkjet printhead cartridges to inkjet printers connected to a network according to a preferred embodiment; and
FIGS. 3A and 3B are exemplary tabular representations of ink dot count values stored in printer memory in association with printhead identification values for two different printhead cartridges.

### DETAILED DESCRIPTION

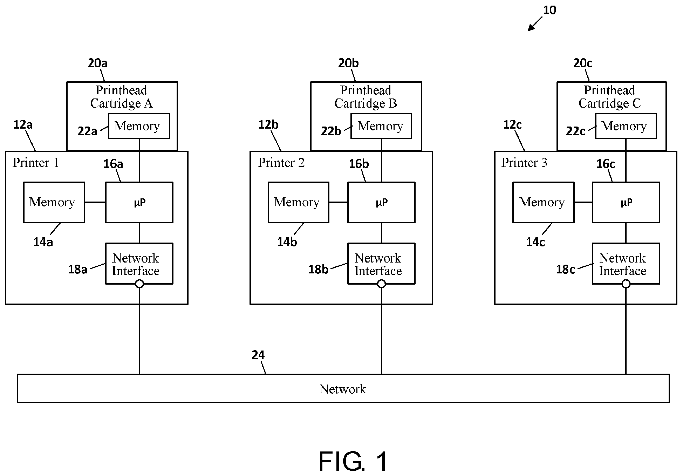

As shown in FIG. 1, an apparatus 10, i.e., an inkjet printer system 10 includes multiple inkjet printers 12a, 12b, 12c connected to a network 24, such as an Ethernet network. Each of the printers 12a, 12b, 12c includes a memory device 14a, 14b, 14c (for example, nonvolatile memory device), a processor 16a, 16b, 16c, and a network interface 18a, 18b, 18c. The network interfaces 18a, 18b, 18c enable communications between each of the printers 12a, 12b, 12c via the network 24. Installed in each printer 12a, 12b, 12c is a printhead cartridge 20a, 20b, 20c. Each printhead cartridge 20a, 20b, 20c has a memory device 22a, 22b, 22c (for example, nonvolatile memory device), and contains a quantity of ink in an ink reservoir.

Stored in the memory device 22a, 22b, 22c of each printhead cartridge 20a, 20b, 20c is a numerical or alphanumerical printhead identification value, such as a serial number, that uniquely identifies the printhead cartridge 20a, 20b, 20c. Also stored in each memory device 22a, 22b, 22c is a status indicator value that indicates whether or not the printhead cartridge 20a, 20b, 20c has been used before in any printer. For example, the status indicator value may be a single-bit value, with a binary 1 indicating a new state and a binary 0 indicating a used state.

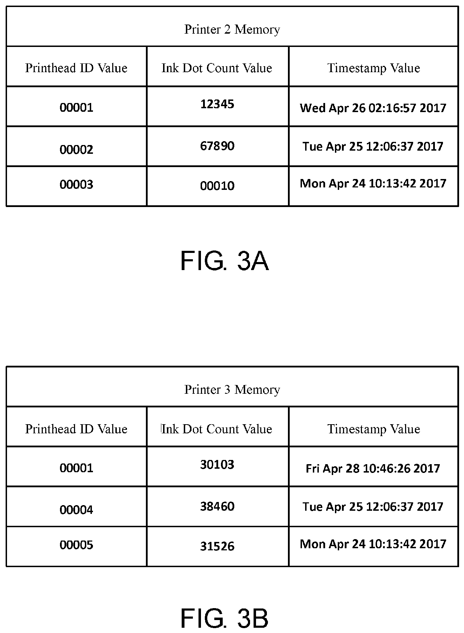

In a preferred embodiment, the memory device 14a, 14b, 14c of each printer 12a, 12b, 12c stores printhead identification values in association with ink dot count values and timestamp values. The ink dot count values and the timestamp values are example of historical record values. Both of or one of the ink dot count values and the timestamp values can be used. The printhead identification values identify all printhead cartridges that have ever been installed in the printer, the ink dot count values indicate the number of ink dots fired from each of the identified printhead cartridges while in use in the printer, and the timestamp values indicate the most recent date/time that each printhead cartridge was used in a print job. FIGS. 3A and 3B depict exemplary tabular representations of ink dot count values stored in association printhead identification values and timestamp values in the memory devices 14b and 14c of the printers 12b and 12c, respectively.

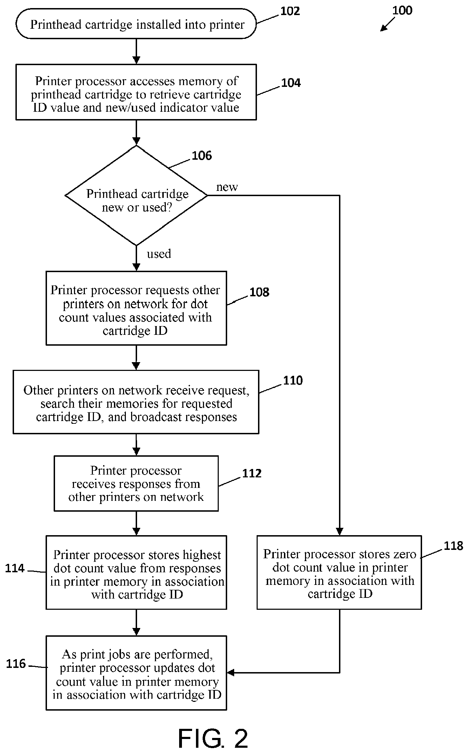

FIG. 2 depicts a preferred embodiment of a method 100 for sharing printhead ink dot count values in an ink jet printer system, such as the system 10 depicted in FIG. 1. When a new or used printhead cartridge, such as the inkjet printhead cartridge 20a (first inkjet printhead cartridge), is installed in a printer, such as the inkjet printer 12a (first inkjet printer, step 102), the processor 16a of the printer accesses the memory device 22a of the cartridge and retrieves the printhead identification value and the status indicator value (step 104). For example, the printhead identification value for the cartridge 20a may be "00001" and its status indicator value may be "0" indicating that cartridge 20a has been used before. Based on determining that the cartridge 20a has been used (step 106), the processor 16a sends a request through the network interface 18a to all other printers connected to the network 24 (step 108). The other inkjet printers 20b, 20c (or second inkjet printers) on the network 24 search their memory devices 14b, 14c for a printhead identification value that matches the value in the request, and each printer having a matching printhead identification value in its memory device sends a response through its network interface 18b, 18c to the network 24 (step 110). Each response includes the ink dot count value that is stored in memory device in association with the matching printhead identification value. For example, if the values depicted in FIG. 3A represent values stored in the memory device 14b of the printer 12b, the response from printer 12b would include the ink dot count value "12345" associated with the printhead identification value "00001." Similarly, if the values depicted in FIG. 3B represent values stored in the memory device 14c of the printer 12c, the response from printer 12c would include the ink dot count value "30103" associated with the printhead identification value "00001."

The processor of the printer 12a receives the responses from the network 24 (step 112), chooses which response is most relevant, which is the response that includes the highest ink dot count value, and stores the highest ink dot count value in the memory device 14a in association with the requested printhead identification value (step 114). For example, the ink dot count value "30103" in the response from printer 12c would be stored in the memory device 14a because it is greater than the ink dot count value "12345" in the response from printer 12b. Thereafter, as ink dots are fired during operation of the printer 12a using the installed printhead cartridge 20a, the ink dot count value associated with the printhead identification value for the printhead cartridge 20a is incrementally updated in the memory device 14a, starting at "30103" (step 116). In alternative embodiments, instead of determining which response includes the highest ink dot count value at step 114, the processor of the printer 12a determines which response includes the most recent timestamp value associated with the reported ink dot count value.

Going back now to step 106, if the status indicator value for the cartridge 20a indicates that the installed cartridge 20a is new (not used) (step 106), the processor of the printer 12a stores an ink dot count value of zero in the memory device 14a in association with the printhead identification value (step 118). Thereafter, as ink dots are fired during operation of the printer 12a using the installed printhead cartridge 20a, the ink dot count value associated with the printhead identification value for the printhead cartridge 20a is incrementally updated in the memory device 14a from an initial count of zero (step 116).

## Claims

1. A method for determining an amount of ink that has been used by an inkjet printhead cartridge (20a) that is installed in an inkjet printer connected to a network (24) of inkjet printers (12a, 12b, 12c), **characterized in that** the method comprises:
storing a printhead identification value in a printhead memory device (22a) of the inkjet printhead cartridge (20a); and
providing a processor (16a) in the inkjet printer (12a) for executing instructions for:
accessing the printhead identification value from the printhead memory device (22a) and storing the printhead identification value in a memory device (14a) of the inkjet printer (12a);
communicating over the network (24) with one or more other inkjet printers (12b, 12c) connected to the network (24);
receiving other ink dot count values from the one or more other inkjet printers (12b, 12c) connected to the network, wherein the other ink dot count values received from the one or more other inkjet printers (12b, 12c) are associated with the printhead identification value stored in the memory device (14a) of the inkjet printer (12a);
storing the other ink dot count values having highest value as an ink dot count value in the memory device (14a) of the inkjet printer (12a); and
as printing is being performed by the inkjet printer (12a), updating the ink dot count value stored in the memory device (14a) of the inkjet printer (12a) by incrementing the ink dot count value stored in the memory device (14a) of the inkjet printer (12a) proportional to a number of ink dots ejected from the inkjet printhead cartridge (20a).

2. The method of claim 1, **characterized in that** the method further comprises storing a status indicator value in the printhead memory device (22a) for indicating a used status or a not-used status of the inkjet printhead cartridge (20a) prior to installing the inkjet printhead cartridge (20a) in the inkjet printer (12a).

3. The method of claim 1, **characterized in that** the method further comprises determining a remaining ink level value for the inkjet printhead cartridge (20a) based on the ink dot count value stored in the memory device (14a) of the inkjet printer (12a).

4. The method of claim 1, further comprising storing a timestamp value associated with the printhead identification value in the printhead memory device (22a).

5. The method of claim 4, **characterized in that** the method further comprises accessing the timestamp value in the printhead memory device (22a) to determine the most recent timestamp value; and providing the highest ink dot count value based on the most recent timestamp value for storing in the memory device (14a) of the inkjet printer (12a).

6. An inkjet printer (12a) attached to a network (24) of inkjet printers (12a, 12b, 12c), **characterized in that** the inkjet printer comprises;
a network interface (18a) configured to communicate with the network (24) of the inkjet printers (12a, 12b, 12c);
an inkjet printhead cartridge (20a) having a printhead memory device (22a) in which a printhead identification value is stored;
a memory device (14a) of the inkjet printer (12a) configured to store the printhead identification value accessed from the printhead memory device (22a);
a processor (18a) configured to execute instructions for
communicating over the network (24) with one or more other inkjet printers (12b, 12c) connected to the network (24);
receiving other ink dot count values from the one or more other inkjet printers (12b, 12c) connected to the network (24), wherein the other ink dot count values received from the one or more other inkjet printers (12b, 12c) are associated with the printhead identification value stored in the memory device (14a) of the inkjet printer (12a);
storing the other ink dot count values having highest value as an ink dot count value in the memory device (14a) of the inkjet printer (12a); and
as printing is being performed by the inkjet printer (12a), updating the dot count value stored in the memory device (14a) of the inkjet printer (12a) by incrementing the ink dot count value stored in the memory device (14a) of the inkjet printer (12a) proportional to a number of ink dots ejected from the inkjet printhead cartridge (22a).

7. The inkjet printer (12a) of claim 6, **characterized in that** the processor (18a) is configured to execute instructions to determine a remaining ink level value for the inkjet printhead cartridge (20a) based on the current ink dot count value stored in the memory device (14a) of the inkjet printer (12a).

8. The inkjet printer (12a) of claim 6, **characterized in that** after the processor (18a) is configured to executes instructions for updating the dot count value stored in the memory device (14a) of the inkjet printer (12a), the processor (18a) configured to execute instructions for storing the ink dot count value in the memory device (14a) of the inkjet printer (12a) in association with the printhead identification value.

## Patentansprüche

1. Verfahren zum Bestimmen einer Tintenmenge, die von einer Tintenstrahldruckkopfkassette (20a) verwendet worden ist, die in einem Tintenstrahldrucker installiert ist, der mit einem Netzwerk (24) von Tintenstrahldruckern (12a, 12b, 12c) verbunden ist, **dadurch gekennzeichnet, dass** das Verfahren umfasst:
Speichern eines Druckkopf-Identifikationswertes in einer Druckkopf-Speichervorrichtung (22a) der Tintenstrahldruckkopfkassette (20a); und
Bereitstellen eines Prozessors (16a) in dem Tintenstrahldrucker (12a) zum Ausführen von Anweisungen zum:
Zugreifen auf den Druckkopf-Identifikationswert von der Druckkopf-Speichervorrichtung (22a) und Speichern des Druckkopf-Identifikationswertes in einer Speichervorrichtung (14a) des Tintenstrahldruckers (12a);
Kommunizieren über das Netzwerk (24) mit einem oder mehreren anderen Tintenstrahldruckern (12b, 12c), die mit dem Netzwerk (24) verbunden sind;
Empfangen anderer Tintenpunktzählwerte von dem einen oder den mehreren anderen Tintenstrahldruckern (12b, 12c), die mit dem Netzwerk verbunden sind, wobei die anderen Tintenpunktzählwerte, die von dem einen oder den mehreren anderen Tintenstrahldruckern (12b, 12c) empfangen werden, mit dem Druckkopf-Identifikationswert assoziiert sind, der in der Speichervorrichtung (14a) des Tintenstrahldruckers (12a) gespeichert ist;
Speichern der anderen Tintenpunktzählwerte mit dem höchsten Wert als einen Tintenpunktzählwert in der Speichervorrichtung (14a) des Tintenstrahldruckers (12a); und
während des Durchführens von Drucken durch den Tintenstrahldrucker (12a), Aktualisieren des in der Speichervorrichtung (14a) des Tintenstrahldruckers (12a) gespeicherten Tintenpunktzählwerts durch Inkrementieren des in der Speichervorrichtung (14a) des Tintenstrahldruckers (12a) gespeicherten Tintenpunktzählwerts proportional zu einer Anzahl von Tintenpunkten, die von der Tintenstrahldruckkopfkassette (20a) ausgestoßen werden.

2. Verfahren gemäß Anspruch 1, **dadurch gekennzeichnet, dass** das Verfahren ferner umfasst Speichern eines Statusindikatorwertes in der Druckkopf-Speichervorrichtung (22a), um einen benutzten Status oder einen nicht benutzten Status der Tintenstrahldruckkopfkassette (20a) vor der Installation der Tintenstrahldruckkopfkassette (20a) in den Tintenstrahldrucker (12a) anzuzeigen.

3. Verfahren gemäß Anspruch 1, **dadurch gekennzeichnet, dass** das Verfahren ferner umfasst Bestimmen eines verbleibenden Tintenpegelwertes für die Tintenstrahldruckkopfkassette (20a) auf der Grundlage des in der Speichervorrichtung (14a) des Tintenstrahldruckers (12a) gespeicherten Tintenpunktzählwertes.

4. Das Verfahren gemäß Anspruch 1 ferner umfassend Speichern eines Zeitstempelwerts, der mit dem Druckkopf-Identifikationswert in der Druckkopf-Speichervorrichtung (22a) assoziiert ist.

5. Verfahren gemäß Anspruch 4, **dadurch gekennzeichnet, dass** das Verfahren ferner umfasst: Zugreifen auf den Zeitstempelwert in der Druckkopf-Speichervorrichtung (22a), um den jüngsten Zeitstempelwert zu bestimmen; und Bereitstellen des höchsten Tintenpunktzählwerts auf der Grundlage des jüngsten Zeitstempelwerts zum Speichern in der Speichervorrichtung (14a) des Tintenstrahldruckers (12a).

6. Tintenstrahldrucker (12a), der an ein Netzwerk (24) von Tintenstrahldruckern (12a, 12b, 12c) angeschlossen ist, **dadurch gekennzeichnet, dass** der Tintenstrahldrucker umfasst;
eine Netzwerkschnittstelle (18a), die zur Kommunikation mit dem Netzwerk (24) der Tintenstrahldrucker (12a, 12b, 12c) konfiguriert ist;
eine Tintenstrahldruckkopfkassette (20a) mit einer Druckkopf-Speichervorrichtung (22a), in der ein Druckkopf-Identifikationswert gespeichert ist;
eine Speichervorrichtung (14a) des Tintenstrahldruckers (12a), die so konfiguriert ist, dass sie den Druckkopf-Identifikationswert speichert, mit Zugriff von der Druckkopf-Speichervorrichtung (22a);
einen Prozessor (18a), der so konfiguriert ist, dass er Anweisungen ausführt zum
Kommunizieren über das Netzwerk (24) mit einem oder mehreren anderen Tintenstrahldruckern (12b, 12c), die mit dem Netzwerk (24) verbunden sind;
Empfangen anderer Tintenpunktzählwerte von dem einen oder den mehreren anderen Tintenstrahldruckern (12b, 12c), die mit dem Netzwerk (24) verbunden sind, wobei die anderen Tintenpunktzählwerte, die von dem einen oder den mehreren anderen Tintenstrahldruckern (12b, 12c) empfangen werden, mit dem Druckkopf-Identifikationswert assoziiert sind, der in der Speichervorrichtung (14a) des Tintenstrahldruckers (12a) gespeichert ist;
Speichern der anderen Tintenpunktzählwerte mit dem höchsten Wert als einen Tintenpunktzählwert in der Speichervorrichtung (14a) des Tintenstrahldruckers (12a); und
während des Durchführens von Drucken durch den Tintenstrahldrucker (12a), Aktualisieren des in der Speichervorrichtung (14a) des Tintenstrahldruckers (12a) gespeicherten Punktzählwertes durch Inkrementieren des in der Speichervorrichtung (14a) des Tintenstrahldruckers (12a) gespeicherten Tintenpunktzählwertes proportional zu einer Anzahl von Tintenpunkten, die von der Tintenstrahldruckkopfkassette (22a) ausgestoßen werden.

7. Tintenstrahldrucker (12a) gemäß Anspruch 6, **dadurch gekennzeichnet, dass** der Prozessor (18a) so konfiguriert ist, dass er Anweisungen ausführt, um einen verbleibenden Tintenpegelwert für die Tintenstrahldruckkopfkassette (20a) auf der Grundlage des aktuellen Tintenpunktzählwerts zu bestimmen, der in der Speichervorrichtung (14a) des Tintenstrahldruckers (12a) gespeichert ist.

8. Tintenstrahldrucker (12a) gemäß Anspruch 6, **dadurch gekennzeichnet, dass** der Prozessor (18a) so konfiguriert ist, dass er Anweisungen zum Aktualisieren des in der Speichervorrichtung (14a) des Tintenstrahldruckers (12a) gespeicherten Punktzählwerts ausführt, der Prozessor (18a) so konfiguriert ist, dass er Anweisungen zum Speichern des Tintenpunktzählwerts in der Speichervorrichtung (14a) des Tintenstrahldruckers (12a) in Assoziation mit dem Druckkopf-Identifikationswert ausführt.

## Revendications

1. Un procédé pour déterminer une quantité d'encre qui a été utilisée par une cartouche (20a) de tête d'impression à jet d'encre qui est installée dans une imprimante à jet d'encre connectée à un réseau (24) d'imprimantes à jet d'encre (12a, 12b, 12c), **caractérisé en ce que** le procédé comprend :
le fait de stocker une valeur d'identification de tête d'impression dans un dispositif à mémoire (22a) de tête d'impression de la cartouche (20a) de tête d'impression à jet d'encre ; et
le fait de prévoir un processeur (16a) dans l'imprimante à jet d'encre (12a) pour exécuter des instructions pour :
accéder à la valeur d'identification de tête d'impression à partir du dispositif à mémoire (22a) de tête d'impression et stocker la valeur d'identification de tête d'impression dans un dispositif à mémoire (14a) de l'imprimante à jet d'encre (12a) ;
communiquer sur le réseau (24) avec une ou plusieurs autres imprimantes à jet d'encre (12b, 12c) connectées au réseau (24) ;
recevoir d'autres valeurs de comptage de points d'encre en provenance desdites une ou plusieurs autres imprimantes à jet d'encre (12b, 12c) connectées au réseau, les autres valeurs de comptage de points d'encre reçues en provenance desdites une ou plusieurs autres imprimantes à jet d'encre (12b, 12c) étant associées à la valeur d'identification de la tête d'impression stockée dans le dispositif à mémoire (14a) de l'imprimante à jet d'encre (12a) ;
stocker les autres valeurs de comptage de points d'encre ayant la valeur la plus élevée en tant que valeur de comptage de points d'encre dans le dispositif à mémoire (14a) de l'imprimante à jet d'encre (12a) ; et
pendant que l'impression est effectuée par l'imprimante à jet d'encre (12a), mettre à jour la valeur de comptage de points d'encre stockée dans le dispositif à mémoire (14a) de l'imprimante à jet d'encre (12a) en incrémentant la valeur de comptage de points d'encre stockée dans le dispositif à mémoire (14a) de l'imprimante à jet d'encre (12a) de façon proportionnelle à un nombre de points d'encre éjectés de la cartouche (20a) de tête d'impression à jet d'encre.

2. Le procédé selon la revendication 1, **caractérisé en ce que** le procédé comprend en outre le fait de stocker une valeur d'indicateur d'état dans le dispositif à mémoire (22a) de tête d'impression pour indiquer un état utilisé ou un état non-utilisé de la cartouche (20a) de tête d'impression à jet d'encre avant d'installer la cartouche (20a) de tête d'impression à jet d'encre dans l'imprimante à jet d'encre (12a).

3. Le procédé selon la revendication 1, **caractérisé en ce que** le procédé comprend en outre le fait de déterminer une valeur de niveau d'encre restant pour la cartouche (20a) de tête d'impression à jet d'encre sur la base de la valeur de comptage de points d'encre stockée dans le dispositif à mémoire (14a) de l'imprimante (12a) à jet d'encre.

4. Le procédé selon la revendication 1, comprenant en outre le fait de stocker une valeur d'horodatage associée à la valeur d'identification de tête d'impression dans le dispositif à mémoire (22a) de tête d'impression.

5. Le procédé selon la revendication 4, **caractérisé en ce que** le procédé comprend en outre le fait d'accéder à la valeur d'horodatage dans le dispositif à mémoire (22a) de tête d'impression pour déterminer la valeur d'horodatage la plus récente ; et le fait de fournir la valeur de comptage de points d'encre la plus élevée sur la base de la valeur d'horodatage la plus récente pour stocker dans le dispositif à mémoire (14a) de l'imprimante à jet d'encre (12a).

6. Une imprimante à jet d'encre (12a) fixée à un réseau (24) d'imprimantes à jet d'encre (12a, 12b, 12c), **caractérisée en ce que** l'imprimante à jet d'encre comprend :
une interface réseau (18a) configurée pour communiquer avec le réseau (24) des imprimantes à jet d'encre (12a, 12b, 12c) ;
une cartouche (20a) de tête d'impression à jet d'encre ayant un dispositif à mémoire (22a) de tête d'impression dans lequel une valeur d'identification de tête d'impression est stockée ;
un dispositif à mémoire (14a) de l'imprimante à jet d'encre (12a) configuré pour stocker la valeur d'identification de tête d'impression accessible depuis le dispositif à mémoire (22a) de tête d'impression ;
un processeur (18a) configuré pour exécuter des instructions pour
communiquer sur le réseau (24) avec une ou plusieurs autres imprimantes à jet d'encre (12b, 12c) connectées au réseau (24) ;
recevoir d'autres valeurs de comptage de points d'encre en provenance desdites une ou plusieurs autres imprimantes à jet d'encre (12b, 12c) connectées au réseau (24), les autres valeurs de comptage de points d'encre reçues en provenance desdites une ou plusieurs autres imprimantes à jet d'encre (12b, 12c) étant associées à la valeur d'identification de la tête d'impression stockée dans le dispositif à mémoire (14a) de l'imprimante à jet d'encre (12a) ;
stocker les autres valeurs de comptage de points d'encre ayant la valeur la plus élevée en tant que valeur de comptage de points d'encre dans le dispositif à mémoire (14a) de l'imprimante à jet d'encre (12a) ; et
pendant que l'impression est effectuée par l'imprimante à jet d'encre (12a), mettre à jour la valeur de comptage de points stockée dans le dispositif à mémoire (14a) de l'imprimante à jet d'encre (12a) en incrémentant la valeur de comptage de points d'encre stockée dans le dispositif à mémoire (14a) de l'imprimante imprimante à jet d'encre (12a) de façon proportionnelle à un nombre de points d'encre éjectés de la cartouche (22a) de tête d'impression à jet d'encre.

7. L'imprimante à jet d'encre (12a) selon la revendication 6, **caractérisée en ce que** le processeur (18a) est configuré pour exécuter des instructions afin de déterminer une valeur de niveau d'encre restant pour la cartouche (20a) de tête d'impression à jet d'encre sur la base de la valeur actuelle de comptage de points d'encre stockée dans le dispositif à mémoire (14a) de l'imprimante à jet d'encre (12a).

8. L'imprimante à jet d'encre (12a) selon la revendication 6, **caractérisée en ce qu'**après que le processeur (18a) soit configuré pour exécuter des instructions de façon à mettre à jour la valeur de comptage de points stockée dans le dispositif à mémoire (14a) de l'imprimante à jet d'encre (12a), le processeur (18a) est configuré pour exécuter des instructions de façon à stocker la valeur de comptage de points d'encre dans le dispositif à mémoire (14a) de l'imprimante à jet d'encre (12a) en association avec la valeur d'identification de la tête d'impression.
